**Europäisches Patentamt**

**European Patent Office**

**Office européen des brevets**

(19)

(11) Veröffentlichungsnummer: **0 301 200 B1**

## (12) EUROPÄISCHE PATENTSCHRIFT

(45) Veröffentlichungstag der Patentschrift: **12.02.92**

(51) Int. Cl.⁵: **B29C 45/17**, B29C 45/47

(21) Anmeldenummer: **88108750.6**

(22) Anmeldetag: **01.06.88**

(54) **Kunststoff-Spritzgiessmaschine für wahlweise zentrale oder lineare Formfüllung.**

(30) Priorität: **30.07.87 DE 3725220**

(43) Veröffentlichungstag der Anmeldung:
**01.02.89 Patentblatt 89/05**

(45) Bekanntmachung des Hinweises auf die
Patenterteilung:
**12.02.92 Patentblatt 92/07**

(84) Benannte Vertragsstaaten:
**AT CH DE ES FR GB IT LI NL**

(56) Entgegenhaltungen:
**DE-A- 1 554 768**

(73) Patentinhaber: **Hehl, Karl**
**Arthur-Hehl-Strasse 32**
**W-7298 Lossburg 1(DE)**

(72) Erfinder: **Hehl, Karl**
**Arthur-Hehl-Strasse 32**
**W-7298 Lossburg 1(DE)**

(74) Vertreter: **Mayer, Friedrich, Dr.**
**Patentanwälte Dr. Mayer & Frank Westliche 24**
**W-7530 Pforzheim(DE)**

**Beschreibung**

Die Erfindung bezieht sich auf eine Kunststoff-Spritzgießmaschine entsprechend dem Oberbegriff des Patentanspruches 1.

Bei einer bekannten Kunststoff-Spritzgießmaschine (gattungsbildende DE-GM 1.852.612) kann wahlweise eine zentrale Formfüllung oder eine lineare Formfüllung der Spritzgießform mit zentraler Angußöffnung bzw. der alternativ eingesetzten Spritzgießform mit nicht-zentraler Angußöffnung durchgeführt werden. Zu diesem Zweck ist die die Spritzgießeinheit tragende Plattform verschwenkbar auf einer stationären horizontalen Achse gelagert. Der als Antriebseinrichtung benutzte hydraulische Antriebszylinder ist auf der axial festgelegten Plattform abgestützt, die mit der Spritzgießeinheit eine Schwenkeinheit bildet.

Es ist auch bekannt, die Spritzgießeinheit einer Kunststoff-Spritzgießmaschine derart verschwenkbar zu lagern, daß sie aus ihrer durch eine zentrale Spritzachse bestimmten Position für Wartungszwecke in zwei entgegengesetzte Richtungen verschwenkbar ist. Dabei ist die auf Holmen geführte Spritzgießeinheit auf einer horizontalen Achse verschwenkbar, die in den zu den Holmen koaxialen Antriebszylindern der Antriebseinrichtung gelagert ist (DE-GM 6.942.324).

Schließlich ist auch eine Spritzgießmaschine bekannt, deren Spritzgießeinheit aus einer durch die zentrale Spritzachse bestimmten Arbeitseinstellung in einer vorbestimmten Schwenkrichtung zu Wartungszwecken ausschwenkbar ist. Die Schwenkachse ist zu diesem Zweck in einem Bügel gelagert, der parallel zur Spritzachse verschiebbar ist (DE-OS 25 04 719).

Bekannt ist es auch, die Spritzgießeinheit vor Übergang auf ein anderes Verarbeitungsmaterial durch 'Leerspritzen' vom bisherigen Verarbeitungsmaterial zu befreien. Zu diesem Zweck wird eine Platrte vor die Angußöffnung der Spritzgießform eingefahren, auf welche das im Plastifizierzylinder befindliche restliche Verarbeitungsmaterial zur Entsorgung aufgespritzt wird (DE-OS 36 30 416).

Mit dem Wechsel der Formfüllungsart (zentrale Formfüllung - lineare Formfüllung) ist häufig ein Wechsel des zu verarbeitenden Materials verknüpft, der wiederum die Säuberung des Plastifizierzylinders oder dessen Auswechslung erfordert.

Ausgehend von dem genannten Stand der Technik liegt der Erfindung die Aufgabe zugrunde, eine Kunststoff-Spritzgießmaschine der eingangs genannten Gattung derart weiterzubilden, daß nicht nur allen in der Praxis vorkommenden spritztechnischen Erfordernissen bei Herstellung von Kunststoff-Formteilen unterschiedlicher Gestalt, Größe und Materialbeschaffenheit auf der Grundlage einer wahlweise praktizierbaren zentralen oder linearen Formfüllung Rechnung getragen werden kann, sondern zugleich auch die funktionellen und baulichen Voraussetzungen für den damit verbundenen Einsatz eines anderen Kunststoffes, einer anderen Kunststoffmischung oder eines anderen Füllstoffes (wie Glasfasern und Keramik oder dergl.) bei geringem zeitlichen und baulichen Aufwand vorliegen. Diese Aufgabe wird erfindungsgemäß durch die Merkmale des Patentanspruches 1 gelöst.

Bei einer solchen Ausbildung sind die Verschwenkbarkeit als solche und die hierfür erforderlichen technischen Mittel so gestaltet, daß der bauliche und zeitliche Aufwand für den Wechsel des Plastifizierzylinders oder dessen Reinigung sehr gering gehalten werden und/oder beschleunigt werden kann. Dies gilt mit Bezug auf einen programmgesteuerten Wechsel des Plastifizierzylinders insofern, als bei Auswechslung der Trägerblock in der Spritzgießmaschine verbleibt und lediglich der 'nackte' Plastifizierzylinder ausgewechselt wird. Die Reinigung des Plastifizierzylinders durch dessen Leerspritzen ist einer Programmsteuerung voll zugänglich, weil dieses Leerspritzen einem normalen Spritzzyklus nahezu entspricht. Der technische Aufwand hierfür ist minimal. Bei der erfindungsgemäßen Ausbildung ist es zudem möglich, die im Anspruch 1 niedergelegte bauliche Konzeption der Verschwenkung in der Serienfertigung in zwei Varianten auszulegen, die je nach Kundenwunsch eine horizontale oder eine vertikale Schwenkrichtung bei Austausch nur weniger Bauteile (stationärer Formträger und Plattform) realisierbar sind. Dadurch werden die Fertigungskosten, nicht zuletzt wegen der vereinfachten Lagerhaltung, geringer.

Bei einer Ausbildung nach Patentanspruch 2 ergibt sich eine verbesserte Schwenkführung der Spritzgießeinheit. Nach Anspruch 3 läßt sich eine relativ rasche, programmgesteuerte Verschwenkung realisieren. Nach Anspruch 4 ist ein besonders raumsparender Aufbau des Schwenkteiles des Trägerkörpers möglich.

Weitere Einzelheiten der Erfindung sind in dem Unteransprüche dargestellt.

Nachstehend wird die Erfindung anhand von zwei Ausführungsbeispielen erläutert.

Es zeigen in einem ersten Ausführungsbeispiel für eine vertikale Verschwenkung der Spritzgießeinheit:

Fig. 1     Einen Ausschnitt aus der Kunststoff-Spritzgießmaschine in Seitenansicht bei zentraler Spritzachse (Formträger vertikal geschnitten).

Fig. 2     den Ausschnitt gemäß Fig. 1 bei verschwenkter Sprtzgießeinheit,

Fig. 3     den Ausschnitt gemäß den Fign. 1,2 bei zum Leerspritzen des Plastifizierzylinders verschwenkter Spritzgießeinheit,

Fig. 4 den Ausschnitt gemäß Fig. 1 in Draufsicht (horizontal geschnittener Formträger),

Fig. 5,6 den Ausschnitt gemäß Fig. 1 in Schnitten nach Linien V-V und VI-VI je in vergrößerter Darstellung.

Es zeigen in einem zweiten Ausführungsbeispiel für eine horizontale Verschwenkung der Spritzgießeinheit:

Fig. 7 Einen Ausschnitt aus der Kunststoff-Spritzgießmaschine in Seitenansicht bei zentraler Spritzachse (Formträger vertikal geschnitten),

Fig. 8 den Ausschnitt gemäß Fig. 7 in Draufsicht (Formträger horizontal geschnitten),

Fig. 9,10 den Ausschnitt gemäß Fig. 8 bei unterschiedlichen Schwenkstellungen der Spritzgießeinheit,

Fig. 11 den Ausschnitt gemäß Fig. 7 bei einer in 'Ausbaustellung' befindlichen Spritzgießeinheit,

Fig. 12,13 den Ausschnitt gemäß Fig. 7 in Schnitten nach Linien XII-XII und XIII-XIII in vergrößerter Darstellung.

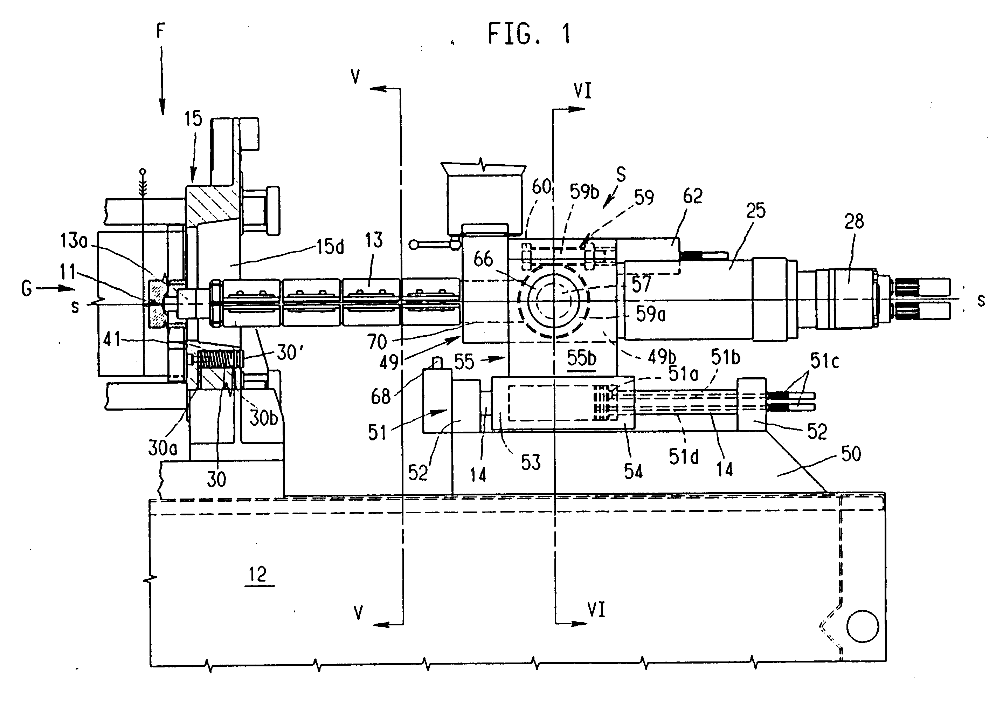

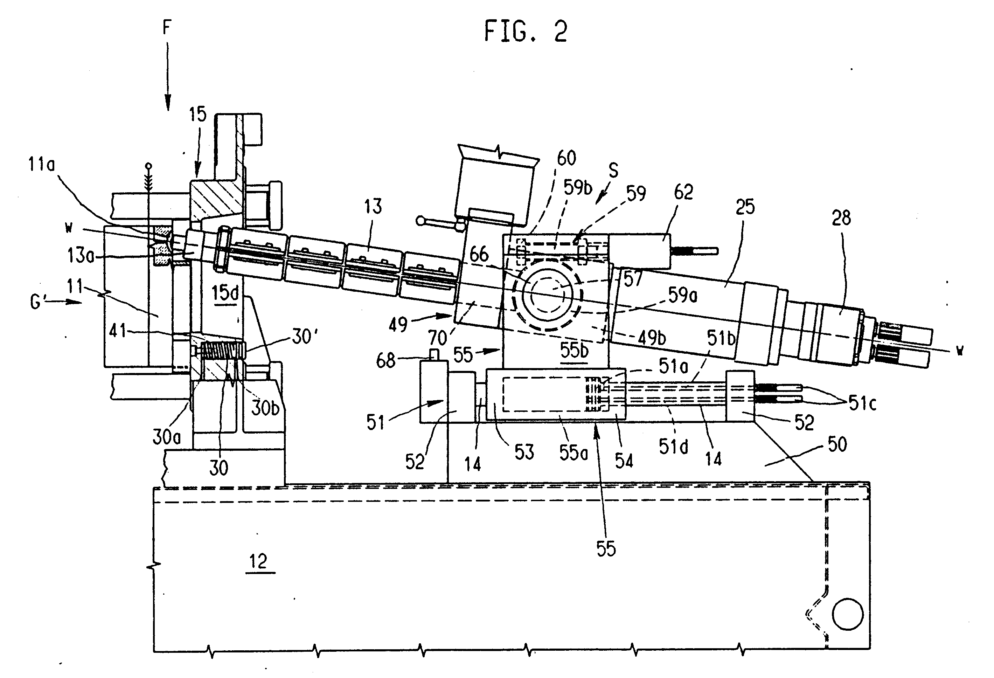

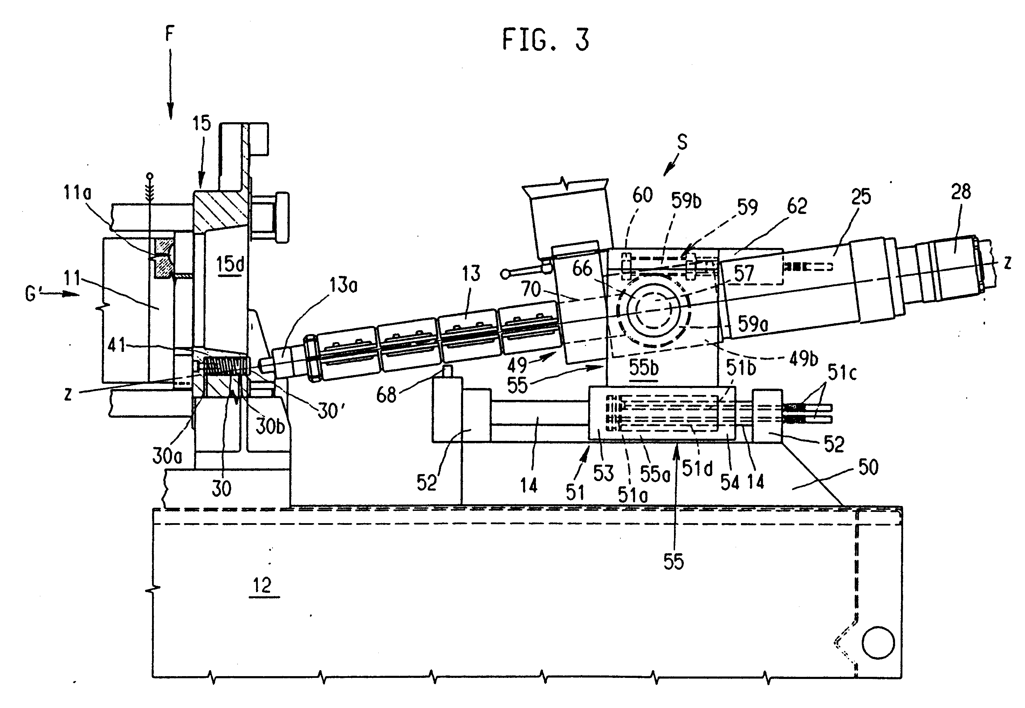

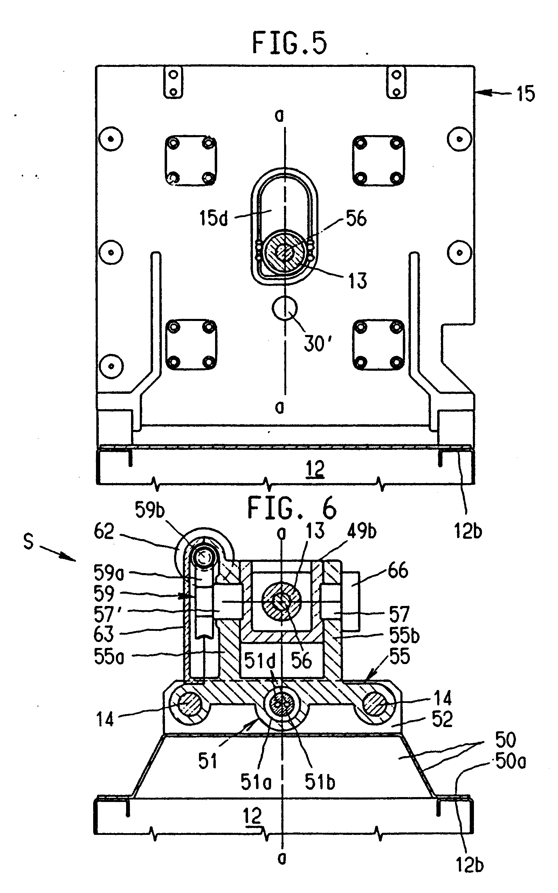

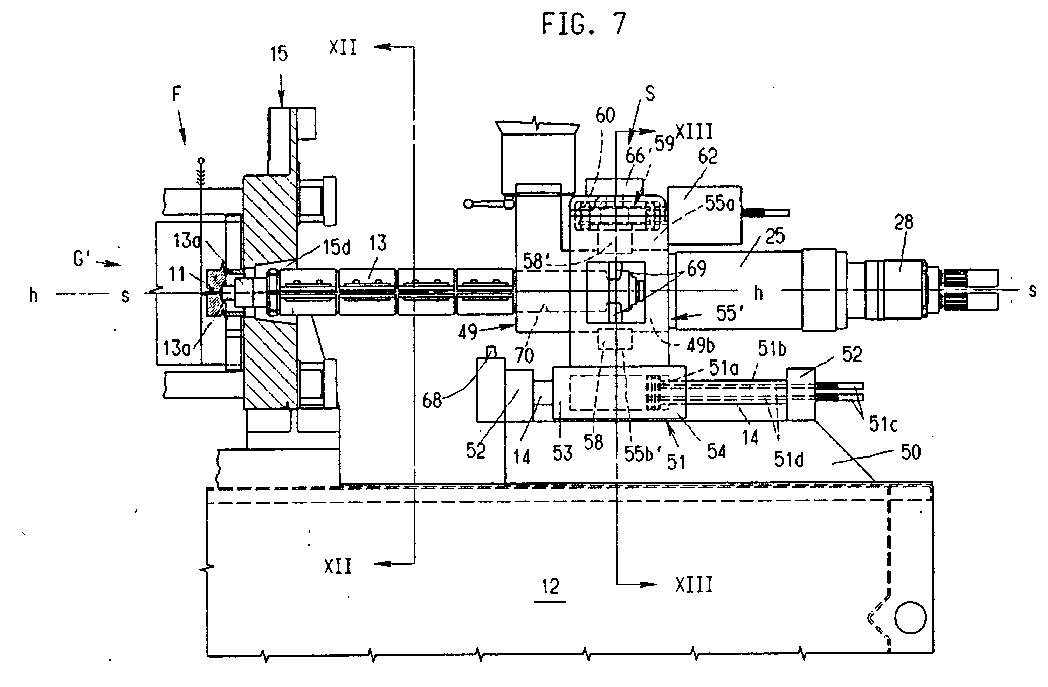

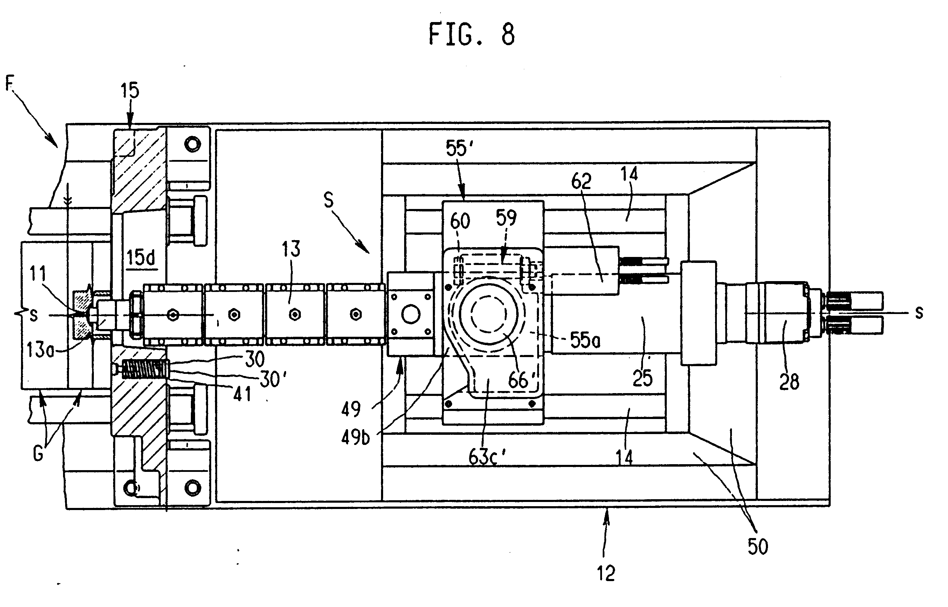

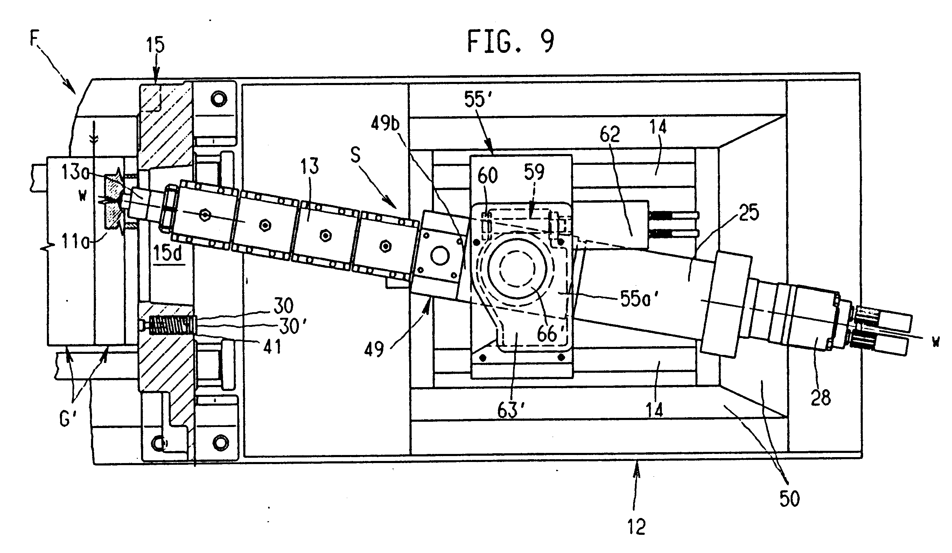

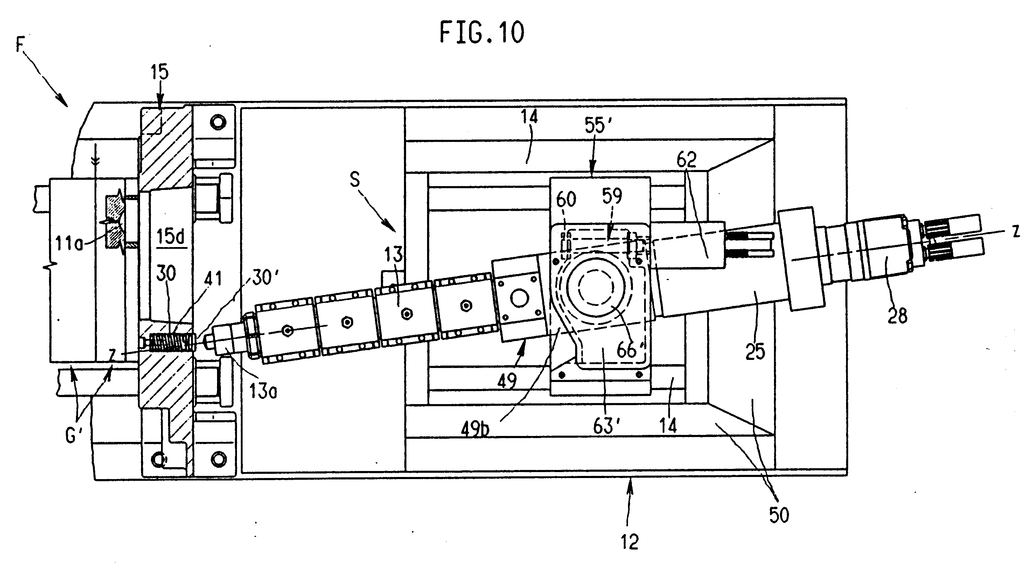

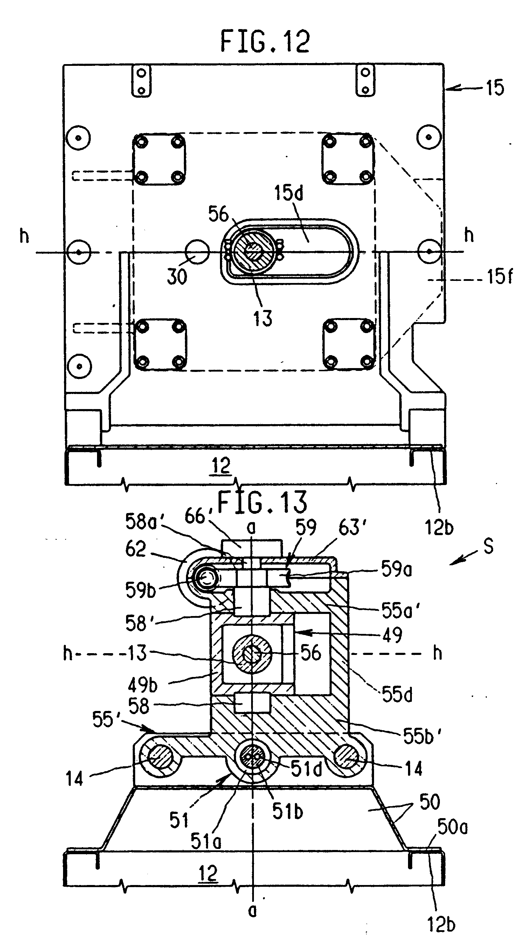

Die Formschließeinheit F ist bei horizontaler Schließrichtung auf dem Maschinenfuß 12 angeordnet. Der stationäre Formträger 15 weist eine Durchtrittsöffnung 15d für die Düse 13a des Plastifizierzylinders 13 auf. In der Formschließeinheit F sind wahlweise eine Spritzgießform (erste Spritzgießform G) mit zentraler Angußöffnung 11 und zentralem Formhohlraum oder weitere Spritzgießformen G' mit nicht-zentraler Angußöffnung 11a und zentralem Formhohlraum für einen asymmetrischen Anguß einspannbar. Die Spritzgießeinheit S ist auf einer Plattform 55 bzw. 55' angeordnet, die über eine Konsole 50 parallel zu einer zentralen Spritzachse s-s auf dem Maschinenfuß 12 abgestützt ist. Der Trägerblock 49 nimmt den Plastifizierzylinder 13 stirnseitig in einer Bohrung im Gleitsitz 70 auf. Rückseitig am Trägerblock 49 sind die Antriebsaggregate 25,28 für die Förderschnecke 56 angeordnet. Der Plastifizierzylinder 13 ist mittels radial geführter Schieber 69 in seinem Gleitsitz 70 verriegelbar, die in Verriegelungsposition in Ausnehmungen des Plastifizierzylinders 13 eingreifen. Der Trägerblock 49 ist mit der ihn tragenden Plattform 55;55' von dem entriegelten und axial arretierten Plastifizierzylinder zwecks dessen Freisetzung nach rückwärts abziehbar. Der Trägerblock 49 ist außerdem über ein rückseitiges Schwenkteil 49b zwischen parallelen Wangen 55a;55b (im Ausführungsbeispiel der Fign. 1 bis 6)bzw. 55a';55b' (im Ausführungsbeispiel der Fign. 7 bis 13) der Plattform 55;55' mittels Drehbolzen 57,57';58,58' schwenkbar gelagert. Dadurch ist die Spritzgießeinheit S bedarfsweise aus einer ersten, durch eine zentrale Spritzachse s-s bestimmten Arbeitsstellung für die erste Spritzgießform in einer vorbestimmten Schwenkrichtung (Einspritz-Schwenkrichtung) in wenigstens eine weitere Arbeitseinstellung (Einspritzstellung) *für die weitere Spritzgießform G' verschwenkbar. Die Verschwenkung erfolgt im Beispiel der Figuren 1 bis 6 in einer durch die zentrale Spritzachse s-s gehenden vertikalen Schwenkebene a-a (Fig. 5,6) und im Beispiel der Figuren 7 bis 13 in einer horizontalen Schwenkebene h-h (Fig. 12,13). Darüberhinaus ist der Trägerblock 49 und damit die Spritzgießeinheit S in einer der Einspritz-Schwenkrichtung entgegengesetzten Schwenkrichtung (Leerspritz-Schwenkrichtung) in der Schwenkebene a-a bzw. h-h in eine Stellung **(Leerspritzstellung) verschwenkbar, in welcher aus der Düse 13a des Plastifizierzylinders 13 unter Druck austretender Kunststoff außerhalb der in Einspritz-Schwenkrichtung erweiterten Durchtrittsöffnung 15d auf eine Stelle (Prallstelle 30) des Formträgers 15 auftrifft. Von dieser kann der erstarrte Kunststoff zur Entsorgung abfallen. Um die Erstarrung zu beschleunigen ist die Prallstelle 30' mittels eines innerhalb des Formträgers 15 angeordneten Kühlkanal 41 kühlbar, der von einem Kühlmedium durchflossen ist. Der Kühlkanal 41 ist am Umfang eines Schraubenbolzens 30 gebildet, der in einer Bohrung entsprechender lichter Weite in den Formträger 15 eingefügt ist. Somit verläuft der Kühlkanal schraubenförmig und ist einerseits von der Oberfläche des Schraubenbolzens 30 und andererseits von der zylindrischen Innenwand der Bohrung begrenzt. Eine Prallfläche der Prallstelle 30' ragt aus der rückseitigen Ober

fläche des Formträgers 15 hervor. Mit 30a und 30b sind die Zu-und Ableitung für das Kühlmedium bezeichnet.

Das Schwenkteil 49b des Trägerblockes 49 ist zur Verschwenkung an planen Gleitflächen der plattenförmigen Wangen 55a,55b bzw. 55a',55b' der Plattform 55;55' geführt. Als Schwenkeinrichtung findet ein Schneckengetriebe 59 Verwendung, dessen Schneckenrad 59a auf einem Drehbolzen 57 bzw. 57' sitzt. Die Plattform 55;55' und ihre Wangen 55a,55b bzw. 55a', 55b' sind durch ein einzi-

* mit Spritzachse w-w

** mit Spritzachse z-z

ges Gußstück gebildet.

Die auf einem stationären Säulenpaar 14 geführte Plattform ist mittels eines hydraulischen Antriebszylinders antreibbar. Dieser ist durch eine Zylinderbohrung in der Plattform und durch einen axial festgelegten Kolben 51a gebildet. Das Säulenpaar ist mittels Befestigungsleisten 52 auf der Konsole 50 des Maschinenfußes abgestützt. Die aus Blech geformte Konsole liegt über horizontale Längsränder 50a auf horizontal eingebördelten Rändern 12b des Maschinenfußes 12 auf (Fig. 6,13). Die durchgehende Zylinderbohrung ist beidends mittels Deckel 53,54 abgedeckt, welche die Zylinderräume des hydraulischen Antriebszylinders begrenzen. Der Kolben 51a ist über seine Kolbenstange 51b an der einen Befestigungsleiste 52 axial festgelegt. Die Zylinderräume werden über die Anschlüsse 51c sowie über Axialbohrungen 51d in der Kolbenstange 51b mit dem hydraulischen Medium versorgt.

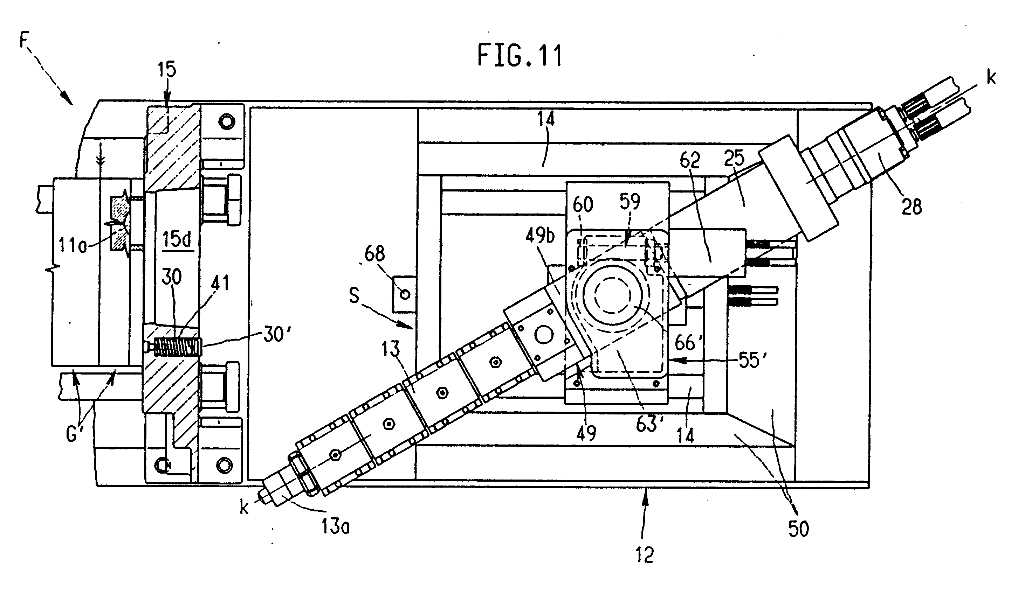

Als Schwenkeinrichtung findet ein Schneckengetriebe 59 Verwendung, dessen Schneckenrad 59a auf einem der Drehbolzen (57' bzw. 58') sitzt. Die Schwenkbewegung wird mittels eines Potentiometers 66 abgetastet. Wird die Spritzgießeinheit in Leerspritzschwenkrichtung maximal verschwenkt, so ergibt sich eine 'Ausbaustellung' (Fig. 11) für den Ausbau der Förderschnecke bzw. zur Durchführung von Wartungs- und Reparaturarbeiten.

as Ausführungsbeispiel gemäß den Figuren 1 bis 6 für vertikale Verschwenkung unterscheidet sich nur wenig von dem Ausführungsbeispiel für horizontale Verschwenkung gemäß den Figuren 7 bis 13: Im Falle einer horizontalen Verschwenkung in der Schwenkebene h-h ist der Potentiometer auf der Seite des Schneckenrades 59a am Schwenkteil 49b angeordnet. Im Falle einer vertikalen Verschwenkung in der Schwenkebene a-a ist der Potentiometer 66 auf der dem Schneckenrad 59a gegenüberliegenden Seite am Schwenkteil 49b angeordnet. Im Beispiel der Fig. 1 bis 6 sind die plattenförmigen vertikalen Wangen 55a,55b im gleichen Abstand von der vertikalen Schwenkebene a-a angeordnet. Das Schneckenrad 59a und die parallel zur Spritzachse angeordnete und in der Wange 55a axial festgelegte Schneckenwelle 59b sind durch einen vertikalen Deckel abgedeckt. Im Beispiel der Fig. 7 bis 13 sind das obere Schneckenrad 59a und die Schneckenwelle 59b mit Hilfe des horizontalen Deckels 63' abgedeckt. Der obere Drehbolzen 58' wird von einem Verlängerungszapfen 58a' durchsetzt, auf dem der Potentiometer 66' sitzt. Dabei sind die Drehbolzen in horizontalen Wangen 55a', 55b' gelagert, die miteinander über einen vertikalen, seitlichen Steg 55d miteinander verbunden sind. Die untere Wange 55b' ist gewissermaßen durch eine Verdickung der Plattform 55' gebildet.

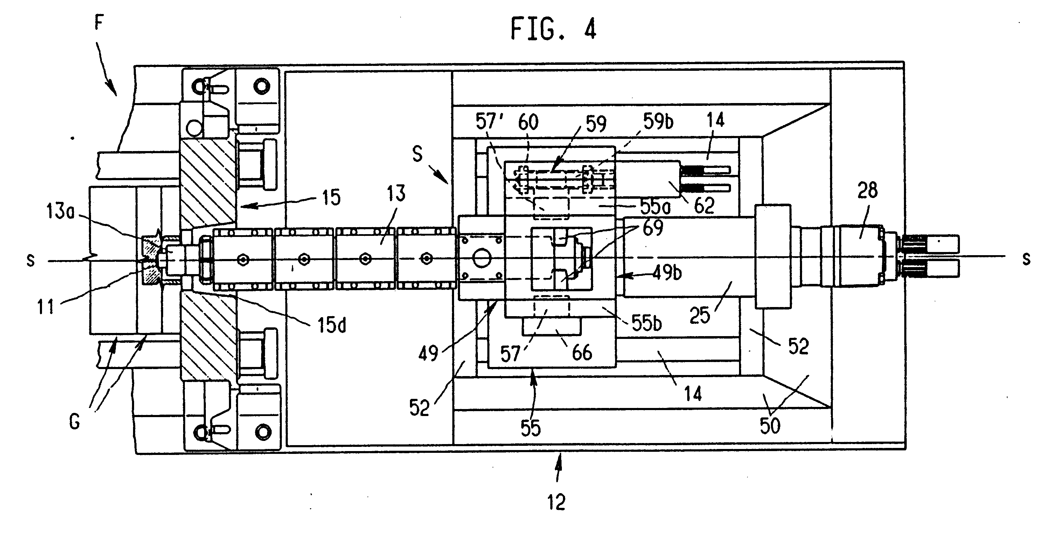

Wie insbesondere aus den Fign. 4 und 7 erkennbar, sind die Schieber 69 zur Verriegelung des Plastifizierzylinders im Schwenkteil in einer Richtung verschiebbar gelagert, die senkrecht zu den Drehbolzen steht.

Die vorgesehene programmgesteuerte Verriegelung des Plastifizierzylinders mit Hilfe der Schieber 69 ist als solche bekannt. Ebenso das Abziehen einer aus Trägerblock und den Antriebsaggregaten bestehenden Einheit vom Plastifizierzylinder im Gefolge einer Rückwärtsbewegung zur Freisetzung des mittels eines nach Programm radial steuerbaren Arretierbolzens 68 axial arretierbaren Plastifizierzylinders (DE-OS 35 13 411). Das Antriebsaggregat 25 für den Axialhub der Förderschnecke 56 und das Antriebsaggregat 28 für deren Rotation sind freitragend am Trägerblock 49 angeordnet.
Bei Programmsteuerung liefert der Potentiometer 66,66',der als Winkelwegmesser arbeitet, dem Rechner der Kunststoff-Spritzgießmaschine die Signale, die zur Realisierung der jeweils gewünschten Schwenkstellung der Spritzgießeinheit S erforderlich sind. Die programmierbare Schwenkbewegung der Spritzgießeinheit genügt für alle Arbeitseinstellungen einschließlich der Leerspritzstellung und der Ausbaustellung. Auch der Durchfluß des Kühlmediums durch den Kühlkanal 41 im Formträger 15 kann in Abhängigkeit vom Überführen der Spritzgießeinheit in 'Leerspritzstellung' nach Programm des Rechners gesteuert werden. Bei beiden Ausführungsbeispielen bildet der Deckel 63 bzw. 63' für das Schneckenrad 59a und die Schneckenwelle 59 mit der benachbarten Wange 55a bzw. 55a' gewissermaßen ein Gehäuse für das Schneckengetriebe 59. In jedem Fall ist die Schneckenwelle 59b von einem Motor 62 angetrieben, der drehfest in der benachbarten Wange 55a bzw. 55a' abgestützt ist. Die mittels einer Kupplung mit dem Motor 62 kuppelbare Schneckenwelle 59b ist in Lagerelementen 60 der genannten Wange drehbar gelagert.

Der im Beispiel gemäß Fig. 1 bis 6 an der Wange 55b befestigte Potentiometer 66 tastet den benachbarten Drehbolzen 57, der im Beispiel der Fig. 7 bis 13 am Deckel 63' befestigte Potentiometer 66' tastet den den Deckel 63' durchsetzenden Verlängerungszapfen 58a' des benachbarten Drehbolzens 58' ab.

Wie aus Fig. 12 erkennbar, ist der Zentralbereich des Formträgers 15 auf der rechten Seite durch einen Abschnitt 15f verbreitert und im Hinblick auf die erweiterte Durchtrittsöffnung 15d dadurch verstärkt.

**Patentansprüche**

1. Kunststoff-Spritzgießmaschine mit einer Formschließeinheit (F), in welcher wahlweise eine Spritzgießform (erste Spritzgießform G) mit zentraler Angußöffnung (11) und zentralem Formhohlraum oder weitere Spritzgießformen (G') mit nichtzentraler Angußöffnung (11a) und zentralem Formhohlraum für einen asymmetrischen Anguß einspannbar sind,

und mit einer, auf einer Plattform (55;55') des Maschinenfußes (12) angeordneten, mittels einer Antriebseinrichtung (51) axial verschiebbaren Spritzgießeinheit (S) mit einem Trägerblock (49), welcher den Plastifizierzylinder (13) und die Antriebsaggregate (25;28) für die Förderschnecke (56) aufnimmt, sowie mit einer Einrichtung zur bedarfsweisen Verschwenkung der Spritzgießeinheit (S) aus einer ersten, durch eine zentrale Spritzachse (s-s) bestimmten Arbeitseinstellung für die erste Spritzgießform (G) in einer vorbestimmten Schwenkrichtung (Einspritz-Schwenkrichtung) in wenigstens eine weitere Arbeitseinstellung (Einspritzstellung) für die weitere Spritzgießform (G') in einer durch die zentrale Spritzachse (s-s) gehenden Schwenkebene (a-a in Fig. 5,6; h-h in Fig. 12,13),

dadurch gekennzeichnet, daß der den Plastifizierzylinder (13) in einem Gleitsitz (70) verriegelbar aufnehmende Trägerblock (49) mit der ihn tragenden Plattform (55;55') von dem entriegelten und axial arretierten Plastifizierzylinder zwecks dessen Freisetzung nach rückwärts abziehbar, über ein rückseitiges Schwenkteil (49b) zwischen parallelen Wangen (55a,55b bzw. 55a',55b') der Plattform (55;55') mittels Drehbolzen (57,57';58,58') schwenkbar gelagert und in einer der Einspritzschwenkrichtung entgegengesetzten Schwenkrichtung (Leerspritzschwenkrichtung) in der Schwenkebene (a-a;h-h) in eine Stellung (Leerspritzstellung) verschwenkbar ist, in welcher aus der Düse (13a) des Plastifizierzylinders (13) unter Druck austretender Kunststoff außerhalb der in Einspritzschwenkrichtung erweiterten Durchtrittsöffnung (15d) auf eine Stelle (Prallstelle 30') des Formträgers (15) auftrifft, von welcher der beim Auftreffen erstarrte Kunststoff zur Entsorgung abfallen kann.

2. Kunststoff-Spritzgießmaschine nach Patentanspruch 1, dadurch gekennzeichnet, daß das Schwenkteil (49b) zur Verschwenkung an planen Gleitflächen der plattenförmigen Wangen (55a,55b;55a',55b') führbar ist.

3. Kunststoff-Spritzgießmaschine nach Patentanspruch 1 oder 2, dadurch gekennzeichnet, daß ein an einem der Drehbolzen (57';58') unmittelbar angreifender Schwenkantrieb (Schneckengetriebe 59) vorgesehen ist.

4. Kunststoff-Spritzgießmaschine nach einem der vorhergehenden Patentansprüche, dadurch gekennzeichnet, daß Schieber (69) zur Verriegelung in Ausnehmungen des Plastifizierzylinders (13) radial und senkrecht zu den Drehbolzen (57,57';58,58') einsteuerbar sind.

5. Kunststoff-Spritzgießmaschine nach einem der vorhergehenden Patentansprüche, dadurch gekennzeichnet, daß die Prallstelle (30') mittels eines innerhalb des Formträgers (15) angeordneten Kühlkanals (41) kühlbar ist.

6. Kunststoff-Spritzgießmaschine nach einem der vorhergehenden Patentansprüche, dadurch gekennzeichnet, daß der Trägerblock (49) in Leerspritz-Schwenkrichtung in eine Ausbaustellung verschwenkbar ist, in welcher seine Spritzachse (k-k) außerhalb des Formträgers (15) verläuft.

7. Kunststoff-Spritzgießmaschine nach einem der Patentansprüche 3 bis 6, dadurch gekennzeichnet, daß als Schwenkeinrichtung ein Schneckengetriebe (59) Verwendung findet, dessen Schneckenrad (59a) auf einem der Drehbolzen (57';58') sitzt, wobei ein die Schwenkbewegung abtastender Potentiometer (66) im Falle einer horizontalen Schwenkebene (h-h) auf der Seite des Schneckenrades (59a) am Schwenkteil (49b) und im Falle einer vertikalen Überführungsebene (a-a) auf der gegenüberliegenden Seite am Schwenkteil (49b) angeordnet ist.

8. Kunststoff-Spritzgießmaschine nach einem der vorhergehenden Patentansprüche, dadurch gekennzeichnet, daß die Plattform (55;55') und ihre Wangen (55a,55b; 55a',55b') durch ein einziges Gußstück gebildet sind.

9. Kunststoff-Spritzgießmaschine nach einem der vorhergehenden Patentansprüche, dadurch gekennzeichnet, daß die auf einem stationären Säulenpaar (14) geführte Plattform (55;55') mittels eines hydraulischen Antriebszylinders antreibbar ist, der durch eine Zylinderbohrung in der Plattform (55;55') und durch einen axial festgelegten Kolben (51a) gebildet ist.

10. Kunststoff-Spritzgießmaschine nach einem der vorhergehenden Patentansprüche, dadurch gekennzeichnet, daß die Drehbolzen (58;58') bei horizontaler Schwenkebene (h-h in Fig. 12,13) in horizontalen Wangen (55a';55b') gelagert sind, die miteinander über einen vertikalen, seitlichen Steg (55d) verbunden sind (Fig. 7-13).

## Claims

1. Plastics injection moulding machine comprising a mould closing unit (F), in which there may be optionally clamped an injection mould assembly (first injection mould assembly G) with a central injection opening (11) and a central mould cavity or further injection mould assemblies (G') with a non central injection opening (11a) and a central mould cavity for an asymmetrical injection,
and comprising an injection moulding unit (S) which is supported on a platform (55:55') on the machine bed (12) and is axially displaceable through the intermediary of a drive means (51), said injection moulding unit (S) including a carrier block (49), which carries the plasticizing cylinder (13) and the drive units (25;28) for the feed screw (56), and comprising an arrangement to pivot the injection moulding unit (S), when required, from a first working position, which is determined by a central injection axis (s-s), for the first injection mould assembly (G) in a predetermined pivotal direction (injection pivoting direction) into at least one further working position (injection position) for the further injection mould assemblies (G') in a pivot plane (a-a in Figures 5,6: h-h in Figure 12) passing through the central injection axis (s-s),

characterized in that the carrier block (49), carrying the plasticizing cylinder (13) in a slide seat (70) in a lockable manner, with the platform (55;55') supporting it, is pivotally mounted so as to be removable rearwardly from the released and axially secured plasticizing cylinder (13) for the purpose of releasing the same, by means of a rear pivotal part (49b) between parallel side plates (55a,55b or 55a',55b') of the platform (55;55') through the intermediary of pivot bolts (57,57';58, 58') and is pivotable in the pivotal plane (a-a;h-h) in a pivotal direction opposed to the injection pivoting direction (blank injection pivoting direction) into a pivotal position (blank injection position), in which plastics material ejected under pressure from the nozzle (13a) of the plasticizing cylinder (13) strikes a position (impact face 30') on the mould carrier (15) outside the passage (15d) widened in the injection pivoting direction, from which position the plastics material solidified on impact can drop off ready for disposal.

2. Plastics injection moulding machine according to claim 1, characterized in that the pivotal part (49b) can be guided for pivoting by flat sliding surfaces on the plate-shaped side plates (55a,55b; 55a',55b').

3. Plastics injection moulding machine according to claim 1 or 2, characterized in that a pivot drive (worm gear drive 59) is provided to mesh directly with one of the pivot bolts (57';58').

4. Plastics injection moulding machine according to one of the preceding claims, characterized in that slides (69) can be controlled to lock into recesses of the plasticizing cylinder (13) radially and vertically to the pivot bolts (57,57'; 58,58').

5. Plastics injection moulding machine according to one of the preceding claims, characterized in that the impact position (30') can be cooled through the intermediary of a coolant channel (41) arranged within the mould carrier (15).

6. Plastics injection moulding machine according to one of the preceding claims, characterized in that the carrier block (49) is pivotable in the blank injection pivotal direction into a dismantling position, in which its injection axis (k-k) extends outside the mould carrier (15).

7. Plastics injection moulding machine according to one of the claims 3 to 6, characterized in that a worm gear drive (59) is used as the pivoting means, the worm gear pinion (59a) of which sits on one of the pivot bolts (57';58'), whereby a potentiometer (66) scanning the pivotal movement is arranged on the side of the worm gear pinion (59a) on the pivotal part (49b) in the case of a horizontal pivotal plane (h-h) and in the case of a vertical transfer plane (a-a) is on the opposite side on the pivoting part (49b).

8. Plastics injection moulding machine according to one of the preceding claims, characterized in that the platform (55;55') and its side plates (55a,55b;55a',55b') are formed by a single cast component.

9. Plastics injection moulding machine according to one of the preceding claims, characterized in that the platform (55;55') guided on a stationary pair of columns (14) is drivable through the intermediary of a hydraulic drive cylinder, that is formed by a cylinder bore in the platform (55;55') and by an axially fixed piston (51a).

10. Plastics injection moulding machine according to one of the preceding claims, characterized in that the pivot bolts (58;58') are mounted in horizontal side plates (55a';55b') with a horizontal pivotal plane (h-h in Figures 12,13), which plates are interconnected through a vertical web (55d) which extends laterally (Figures 7-13).

## Revendications

1. Machine d'injection de matières plastiques, comprenant un dispositif (F) de fermeture de moules dans lequel peuvent être enserrés, sélectivement, un moule de coulée par injection (premier moule G de coulée par injection) percé d'un orifice central d'arrivée (11) et muni d'une cavité centrale de moulage, ou d'autres moules (G') de coulée par injection, percés d'un orifice d'arrivée (11a) non central et munis d'une cavité centrale de moulage, en vue d'obtenir une carotte asymétrique ;

un dispositif (S) de coulée par injection, installé sur une plate-forme (55 ; 55') de la base (12) de la machine, pouvant être animé de coulissements axiaux au moyen d'un mécanisme d'entraînement (51), et doté d'un bloc de support (49) qui reçoit le cylindre de plastification (13) et les groupes (25 ; 28) d'entraînement de la vis convoyeuse (56) ;

ainsi qu'un système pour faire pivoter le dispositif (S) de coulée par injection, à la demande, d'un premier réglage de travail déterminé par un axe central d'injection (s-s) et associé au premier moule (G) de coulée par injection, dans un sens de pivotement prédéterminé (sens de pivotement d'injection) à au moins un autre réglage de travail (position d'injection) associé à l'autre moule (G') de coulée par injection, dans un plan de pivotement (a-a sur les figures 5, 6 ; h-h sur les figures 12, 13) passant par l'axe central d'injection (s-s),

caractérisée par le fait que le bloc de support (49), logeant le cylindre de plastification (13) dans un siège coulissant (70), avec faculté de verrouillage, peut être déboité vers l'arrière avec la plate-forme (55 ; 55') qui le porte, à l'écart dudit cylindre de plastification déverrouillé et arrêté axialement, en vue de la libération de ce dernier ; est monté à pivotement au moyen de tourillons (57, 57' ; 58, 58'), par l'intermédiaire d'une partie pivotante postérieure (49b), entre des flasques parallèles (55a, 55b, respectivement 55a', 55b') de la plate-forme (55 ; 55') ; et peut pivoter dans le plan de pivotement (a-a ; h-h), dans un sens de pivotement (sens de pivotement d'injection à vide) opposé au sens de pivotement d'injection, jusqu'à une position (position d'injection à vide) dans laquelle une matière plastique sortant, sous pression, de la buse (13a) du cylindre de plastification (13) vient rencontrer, en dehors de l'orifice de passage (15d) évasé dans le sens de pivotement d'injection, une zone (zone d'impact 30') du porte-moules (15) à partir de laquelle la matière plastique, solidifiée lors de l' impact, peut tomber en vue de l'évacuation.

2. Machine d'injection de matières plastiques, selon la revendication 1, caractérisée par le fait que la partie pivotante (49b) peut être guidée, en vue du pivotement, sur des surfaces planes de glissement des flasques (55a, 55b ; 55a', 55b') en forme de plaques.

3. Machine d' injection de matières plastiques, selon la revendication 1 ou 2, caractérisée par le fait qu'il est prévu un entraînement en pivotement (transmission 59 à vis sans fin), directement en prise avec l'un des tourillons (57' ; 58').

4. Machine d'injection de matières plastiques, selon l'une des revendications précédentes, caractérisée par le fait que des verrous (69) peuvent être introduits par commande, dans le sens radial et perpendiculairement aux tourillons (57, 57' ; 58, 58'), en vue du verrouillage, dans des évidements du cylindre de plastification (13).

5. Machine d'injection de matières plastiques, selon l'une des revendications précédentes, caractérisée par le fait que la zone d'impact (30') peut être refroidie au moyen d'un canal de refroidissement (41) pratiqué à l'intérieur du porte-moules (15).

6. Machine d'injection de matières plastiques, selon l'une des revendications précédentes, caractérisée par le fait que le bloc de support (49) peut pivoter, dans le sens de pivotement d'injection à vide, jusqu'à une position de démontage dans laquelle son axe d'injection (k-k) s'étend à l'extérieur du porte-moules (15).

7. Machine d'injection de matières plastiques, selon l'une des revendications 3 à 6, caractérisée par le fait qu'on utilise, en tant que système de pivotement, une transmission (59) à vis sans fin dont la roue tangente (59a) est calée sur l'un des tourillons (57' ; 58'), un potentiomètre (66) détectant le mouvement pivotant étant disposé, sur la partie pivotante (49b), du côté de la roue tangente (59a) en présence d'un plan horizontal de pivotement (h-h) et, sur ladite partie pivotante (49b), du côté opposé en présence d'un plan vertical de transfert (a-a).

8. Machine d'injection de matières plastiques, selon l'une des revendications précédentes, caractérisée par le fait que la plate-forme (55 ; 55') et ses flasques (55a, 55b ; 55a', 55b') sont matérialisés par une seule et unique pièce venue de fonderie.

9. Machine d'injection de matières plastiques, selon l'une des revendications précédentes, caractérisée par le fait que la plate-forme (55 ; 55'), guidée sur une paire de colonnes fixe (14), peut être entraînée au moyen d'un vérin hydraulique d'entraînement qui est formé d'un alésage cylindrique, ménagé dans la plate-forme (55 ; 55'), et d'un piston (51a) consigné à demeure dans le sens axial.

10. Machine d'injection de matières plastiques, selon l'une des revendications précédentes, caractérisée par le fait que les tourillons (58 ; 58') sont montés, en présence d'un plan horizontal de pivotement (h-h sur les figures 12, 13), dans des flasques horizontaux (55a' ; 55b' ) qui sont reliés mutuellement par l'intermédiaire d'une membrure latérale verticale (55d) (figures 7-13).

FIG. 1

EP 0 301 200 B1

FIG. 2

FIG. 3

EP 0 301 200 B1

# FIG. 4

## FIG.5

## FIG. 6

# FIG. 7

EP 0 301 200 B1

# FIG. 8

EP 0 301 200 B1

FIG. 9

# FIG.10

EP 0 301 200 B1

FIG.11

EP 0 301 200 B1

## FIG.12

## FIG.13